Europäisches Patentamt

European Patent Office

Office européen des brevets

(19)

(11) Veröffentlichungsnummer : **0 102 577**
**B1**

(12) **EUROPÄISCHE PATENTSCHRIFT**

(45) Veröffentlichungstag der Patentschrift :
16.04.86

(51) Int. Cl.⁴ : **G 03 B 42/04**

(21) Anmeldenummer : **83108238.3**

(22) Anmeldetag : **22.08.83**

(54) **Vorrichtung zum Be- und Entladen von Röntgen-Filmkassetten.**

(30) Priorität : **30.08.82 DE 3232148**

(43) Veröffentlichungstag der Anmeldung :
**14.03.84 Patentblatt 84/11**

(45) Bekanntmachung des Hinweises auf die Patenterteilung : **16.04.86 Patentblatt 86/16**

(84) Benannte Vertragsstaaten :
**FR GB IT**

(56) Entgegenhaltungen :
**DE-A- 2 607 876**
**DE-B- 1 182 951**

(73) Patentinhaber : **AGFA-GEVAERT Aktiengesellschaft**

**D-5090 Leverkusen 1 (DE)**

(72) Erfinder : **Hösel, Peter**
**Zasingerstrasse 6 I**
**D-8000 München 90 (DE)**
Erfinder : **Schindlbeck, Günther**
**Scharfreiterplatz 47**
**D-8000 München 90 (DE)**

EP 0 102 577 B1

**Beschreibung**

Die Erfindung betrifft eine Vorrichtung zum Be- und Entladen von Röntgen-Filmkassetten, mit einem Schacht zur Aufnahme einer Kassette, Transportelementen zum Ein- und Ausfahren der Kassette, Einrichtungen zum Entriegeln, Öffnen und Verschließen der Kassette, Mitteln zur Entnahme eines Filmblattes aus der Kassette und zur Übergabe desselben an ein Transportwalzenpaar und Mitteln zum Eingeben eines neuen Filmblattes in die Kassette.

Aus der DE-A-26 07 876 ist eine Vorrichtung der eingangs genannten Art bekannt, bei der die Kassette in dem Eingabeschacht bis zu einem Anschlag gefahren wird und sodann quer zu dieser Einfahrrichtung eine Verschiebeeinrichtung die Kassette an einen zweiten, seitlichen Anschlag drückt. Damit ist die Kassette mit einer Ecke als Bezugspunkt festgelegt. Sodann wird die Kassette geöffnet, der darin befindliche Film mit einer Saugeinrichtung entnommen und ein neues Filmblatt aus einem Vorratsmagazin in die Kassette eingegeben. Nach dem Verschließen des Deckels wird die Kassette wieder aus dem Eingabeschacht ausgefahren.

Bei der bekannten Vorrichtung ist die Filmblatteingabe in die Kassette durch ein Endlosförderband bewerkstelligt, das aus einer Ruheposition in eine Arbeitsstellung geschwenkt werden kann und das aus einem Kanal auf das Band fallende Blatt in die Kassette leitet. Ein solcher Aufbau ist kompliziert und störanfällig und außerdem ist die Lage des Blattes auf dem Förderband unkontrolliert.

Aufgabe der Erfindung ist es daher, eine Vorrichtung der eingangs genannten Art derart weiterzubilden, daß mit einfachen Mitteln eine sichere Blatteingabe in die Kassette gewährleistet ist.

Diese Aufgabe wird durch die im Kennzeichen des Anspruchs 1 aufgeführten Mittel gelöst.

Mit der Erfindung wird erreicht, daß das Walzenpaar, in welches das entnommene Blatt mittels der Saugeinrichtung eingegeben wird, auch für die Eingabe eines neuen Blattes verwendet werden kann. Eine abschwenkbare Endlosbandfördereinrichtung kann somit entfallen. Durch die unterschiedlichen Stellungen der Kassette zum Entladen und Beladen kann in der ersten Stellung die Saugeinrichtung ungehindert in die Kassette eingreifen und in der zweiten Stellung das neue Filmblatt ohne Hilfsmittel zu seiner Ausrichtung in die Kassette eingegeben werden.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen :

Figur 1 eine perspektivische Ansicht, zum Teil im Schnitt, einer Kassetteneingabestation in einer Vorrichtung zum Be- und Entladen von Röntgen-Filmkassetten ;

Figur 2 eine schematische Ansicht aus anderer Richtung des in Fig. 1 dargestellten Eingabeschachtes mit den Fühlereinrichtungen in perspektivischer Darstellung ;

Figur 3 einen Querschnitt durch die Be- und Entladestation ;

Figur 4 ein Blockschaltbild mit den elektrischen Verknüpfungen der in den Fig. 1 bis 3 gezeigten Fühlerelemente ; und

Figur 5 eine schematische Ansicht einer anderen Ausführungsform der X- bzw. Y-Erkennung.

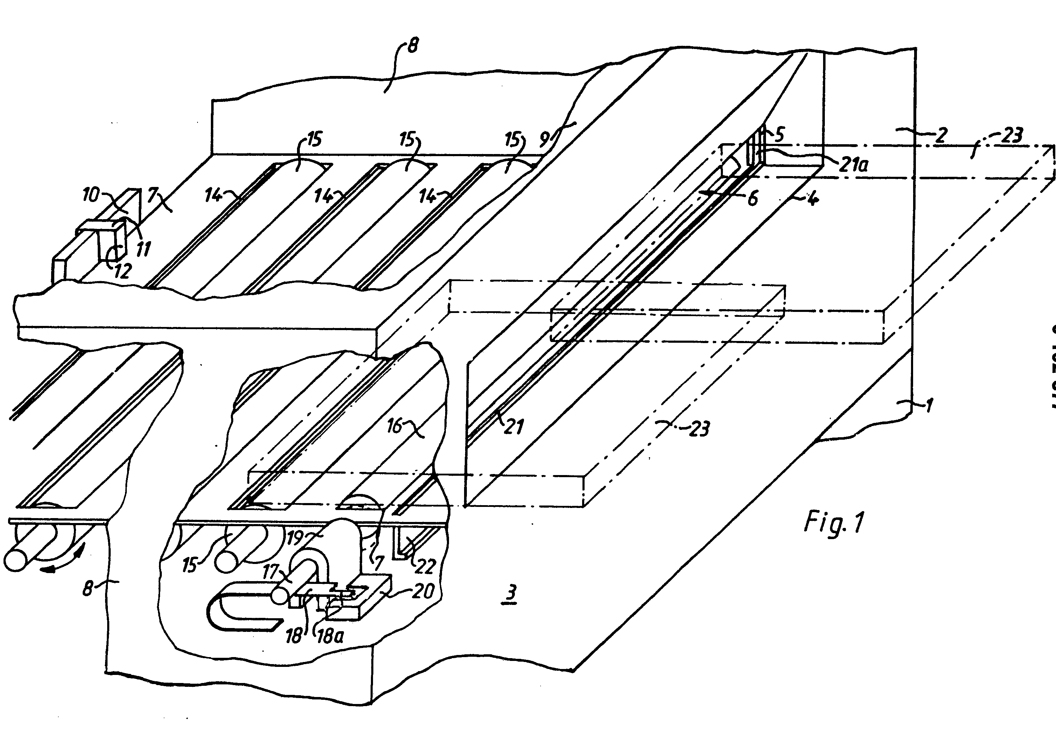

In Fig. 1 ist mit 1 eine Vorrichtung zum Be- und Entladen von Röntgenfilmkassetten bezeichnet, in welcher sich eine Kassettenstation 2 befindet. In einer Frontplatte 3 ist eine Aussparung 4 ausgeformt, von welcher aus Schrägflächen zu einer Eingabeöffnung 5 verlaufen, welche in der Höhe der dicksten und in der Breite dem größten Kassettenformat entspricht. Von der Eingabeöffnung 5 geht ein Schacht 6 aus, der im wesentlichen von einem Boden 7, Seitenwänden 8, einer Deckwand 9 gebildet und nach hinten offen ist. Die rückwärtige Seite des Schachtes 6 wird von einer Anschlagleiste 10 begrenzt, welche eine Ausnehmung 11 aufweist, durch die ein Mikroschalter 12 ragt.

Im Schachtboden 7 ist eine Vielzahl von Längsschlitzen ausgeformt, durch welche angetriebene Walzen 15 mit einigen Millimetern über das Bodenniveau ragen. Die Walzen 15 stehen mit einem nicht dargestellten Antrieb in Verbindung.

Zwischen Eingabeöffnung 5 und der ersten Transportwalze 15 ist in einem weiteren Schlitz 14 im Boden 7 eine Schaltwalze 16 angeordnet, deren beide Achszapfen 17 auf einem Federelement 18 ruhen und welche mittels eines Bügels 19 in allen Richtungen bis auf die auf das Federelement gerichtete fixiert sind. Das Federelement 18 weist die Form einer gebogenen Blattfeder auf und ist mit einem Ende an dem Schachtboden 7 angebracht und weist am anderen Ende eine Fahne 18a auf, welche im Ruhezustand oberhalb dem U-förmigen Einschnitt einer Lichtschranke 20 liegt. In gleicher Weise ist auch die andere Seite der Walze 16 auf einem Federelement 18 gelagert, das mit einer Lichtschranke 20 zusammenwirkt. Zwischen Schaltwalze 16 und Eingabeöffnung 5 ist ein weiterer Schlitz 21 in dem Schachtboden 7 ausgeformt, in welchem ein Schieber 22 versenkt ist, der in seitlichen Nuten 21a geführt ist und durch nicht dargestellte Mittel hinter die Eingabeöffnung 5 angehoben werden kann, wobei der Schieber die Eingabeöffnung 5 lichtdicht verschließt.

Aus Gründen der Übersichtlichkeit sind in Fig. 1 verschiedene Einrichtungen, wie Kassettenabtastung, Öffnungseinrichtung und die Mittel zum Entnehmen und Eingeben eines Filmes, welche sich ebenfalls in dem Schacht befinden, nicht dargestellt.

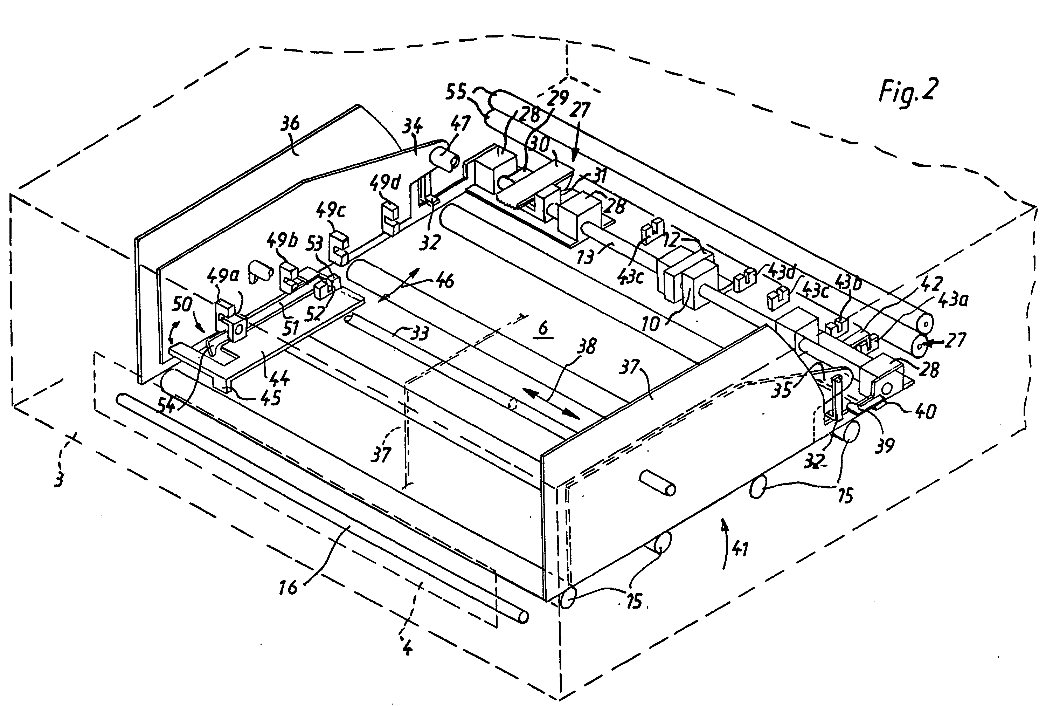

In Fig. 2 sind aus einer anderen Perspektive Elemente beschrieben, die im wesentlichen der Formaterkennung dienen. Teile, die bereits in Fig. 1 beschrieben sind, sind mit den gleichen Bezugszeichen andeutungsweise wiedergegeben. Teile, die in dem Schacht noch vorhanden sind, für die Erfindung jedoch keine Bedeutung haben, sind weggelassen.

An der dem Eingabeschacht 4 gegenüberliegenden Seite ist der bereits in Fig. 1 erwähnte Schalter 12 dargestellt, welcher auf einer Stange 13 angebracht ist. Auf dieser Stange 13 sind an den beiden Seiten Entriegelungseinrichtungen 27 angeordnet, von denen nur eine komplett dargestellt ist. Die Entriegelungseinrichtung 27 weist zwei miteinander verbundene Klötze 28 auf, zwischen denen ein U-förmiges Lager 29 auf der Achse 13 verschiebbar angeordnet ist. Zwischen den Schenkeln des U-förmigen Lagers 29 ist eine Wippe 30 gelagert, die an der zur Kassette weisenden Seite unten eine Riffelung aufweist. Dergegenüber ist unterhalb der Wippe 30 ein verschiebbarer Keil in dem Klotz 28 angeordnet, der mit einer Schrägfläche der Wippe derart zusammenwirkt, daß die Wippe gegen eine nicht dargestellte Feder gegen den Uhrzeigersinn verschwenkt werden kann. Damit läßt sich die Riffelung der Wippe mit der Riffelung der Kassettenentriegelung in Eingriff bringen. Sobald dies geschehen ist, wird das Lager 29 auf der Achse 13 verschoben, womit die Kassette entriegelt ist.

Für das Öffnen bzw. Anheben des Deckels ist auf jeder Seite des Schachtes 6 ein Haken 32 vorgesehen, der jeweils in die entsprechende Ausnehmung an der Kassette unterhalb des Deckels eingreift. Der eine Haken 32 ist an einer Schwenkplatte 34 angebracht, die um eine parallel zur Schaltwalze 16 verlaufende Achse 33 verschwenkbar ist. Der gegenüberliegende Haken 32 ist an einer Verschiebeplatte 35 angebracht, die einerseits um die Achse 33 verschwenkbar und andererseits entlang den Walzen 15 in Richtung auf die Platte 34 verschiebbar ist. Die Verbindung zwischen Achse 33 und Platte 35 ist so ausgeführt, daß die Platte 35 auf der Achse 33 einerseits verschoben, bei einer Drehbewegung der Achse aber mit verschwenkt werden kann.

Außerhalb der beiden Schwenkplatten 34 und 35 sind Wandplatten 36 bzw. 37 angeordnet, welche mit den jeweiligen Entriegelungseinrichtungen 27 verbunden sind. Im übrigen ist die Achse 33 durch die Wandplatten 36 und 37 geführt. Außerdem sind die Wandplatten durch nicht dargestellte Mittel für die noch zu beschreibenden Bewegungen am Geräteboden geführt.

Die Wandplatte 37 steht mit der Verschiebeplatte 35 insofern in Verbindung, als daß sie beide zusammen entlang der Stange 13 verschoben werden können. Mit den Platten 35 und 37 wird auch die Entriegelungseinrichtung 27 in Pfeilrichtung 38 verschoben, womit den unterschiedlichen Abständen der Kassettenhandhaben Rechnung getragen wird.

An der Wandplatte 37 ist in einer Aussparung in der Nähe des Hakens 32 ein Taststift 39 angeordnet, der mit einem Mikroschalter 40 zusammenwirkt. Der Taststift 39 greift bei eingelegter Kassette in eine nur einmal an der Kassette vorhandene Ausnehmung ein und erkennt somit die richtige Lage bezüglich oben und unten und der Vorder- und Rückkante der Kassette.

Die Formaterkennung erfolgt nun durch die im nachfolgenden beschriebenen Mittel. Die aus Verschiebeplatte 35, Wandplatte 37 und Entriegelungseinrichtung 27 bestehende Verschiebeeinrichtung 41 weist an einer geometrisch geeigneten Stelle eine Fahne 42 auf, welche mit der Verschiebebewegung ebenfalls in Richtung 38 verfahren werden kann. Auf dieser Fahrstrecke der Fahne 42 sind an bestimmten Stellen Lichtschranken 43a bis 43e angeordnet. Jede dieser Lichtschranken ist an einem Ort angebracht, für welchen es ein konkretes Maß einer Kassettenlänge gibt. Das heißt, daß die Fahne 42 beispielsweise in der Lichtschranke 43c einen konkreten Wert einer bekannten Kassettenlänge (zu der es mehrere Breiten geben kann) repräsentiert.

Wenn im vorangegangenen die Erkennung der Kassettenlänge bzw. die X-Erkennung erläutert worden ist, soll im folgenden die Y-Erkennung bzw. die Erkennung der Kassettenbreite beschrieben werden. Mit der an sich feststehenden und nur verschwenkbaren Platte 34 steht eine Abtasteinheit 44 in Wirkverbindung, welche im wesentlichen aus einer horizontal angeordneten Platte mit einem vertikal nach unten abgebogenen Meßhaken 45 besteht. Durch nicht dargestellte Mittel ist die Abtasteinheit 44 relativ nur Platte 34 in Einschubrichtung 46 einer Kassette verschiebbar und außerdem durch ebenfalls nicht dargestellte Mittel um eine parallel zur Schaltwalze 16 verlaufende Achse 47 um einen kleinen Winkel schwenkbar angeordnet. An der Abtasteinheit 44 ist ebenfalls eine Fahne 48 angeordnet, welche auf dem Verschiebeweg der Abtasteinheit 44 in Richtung 46 eine Reihe von an der Platte 34 angeordneten Lichtschranken 49a bis 49d durchfahren kann.

Auf der Abtasteinheit 44 ist ferner eine Filmabtastung 50 vorgesehen, welche einen drehbar gelagerten Hebel 41 aufweist, der mit einem Ende 52 eine Lichtschranke 53 durchfahren kann und an seinem anderen Ende eine Spitze 54 aufweist, welche aufgrund einer nicht dargestellten Feder gegen den Uhrzeigersinn bewegt wird.

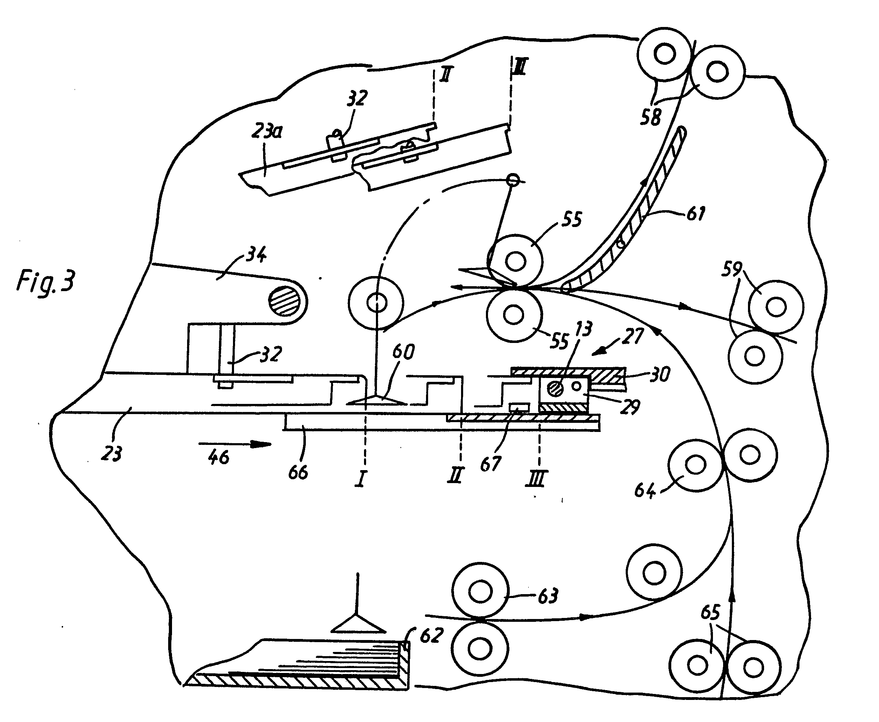

Parallel zur Stange 13 ist außerhalb des Schachtes 16 ein Transportwalzenpaar 55 angeordnet, dessen Aufgabe in Fig. 3 noch näher beschrieben wird.

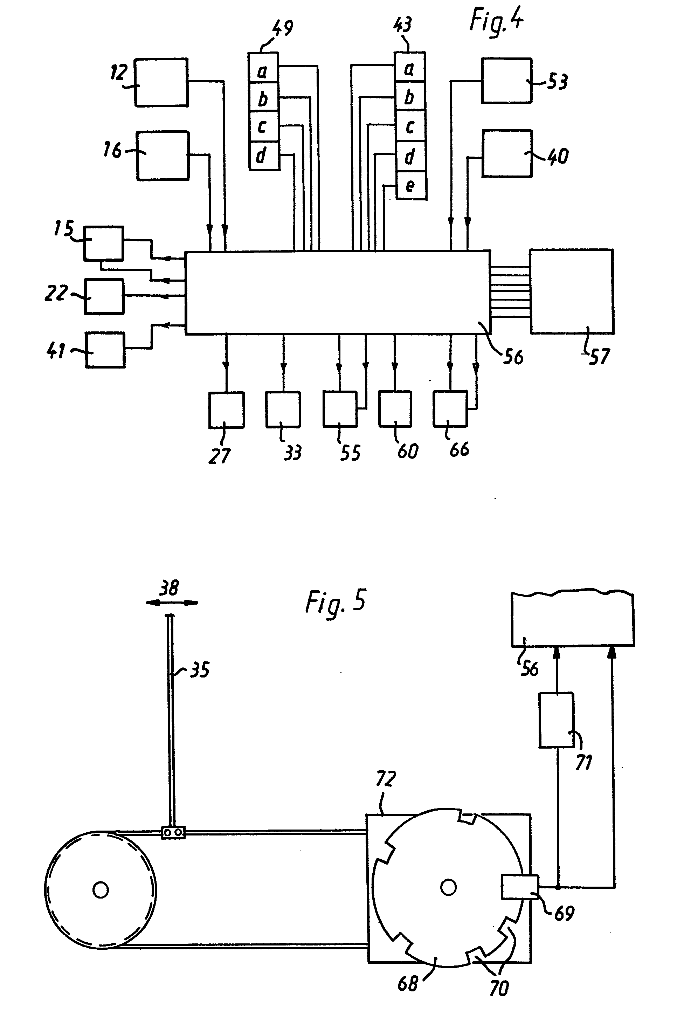

Anhand von Fig. 4 soll nun die Wirkungsweise der in Fig. 2 beschriebenen Anordnung erläutert werden. Wenn eine Kassette 23 durch die Öffnung 4 in den Eingabeschacht 6 eingeführt wird, wird zunächst die Schaltwalze 16 betätigt. Mit ihrer Betätigung wird der nicht dargestellte Antrieb für die Transportwalzen 15 angeschaltet, welche sich daraufhin in der Richtung drehen, daß die Kassette in Richtung zur Stange 13 gefördert wird. Sobald der Schalter 12 betätigt wird, wird der Antrieb für die Transportwalzen 15 wieder abgeschaltet. Ist jedoch die Schaltwalzee 16 noch betätigt, so bedeutet das, daß eine Kassette oder ein Stück in den Schacht 6 eingeführt worden ist, das zu groß ist und demnach kein bekanntes Format darstellt. Diese Verknüpfung zwischen den einzelnen Abtast- und Fühlerelementen wird in einem Rechner 56 hergestellt und überprüft. Wenn also Schalter 12 und 16 betätigt sind, wird über den Rechner die Antriebsrichtung der Transportwalzen 15 umgedreht und die kassette wieder aus dem Schacht 6 ausgestoßen. Ist dagegen nur noch der Schalter 12 betätigt, so wird der Antrieb der Walzen 15 abgeschaltet, die Lichtklappe 22 geschlossen und der nicht dargestellte Antrieb für die Verschiebeeinrichtung 41 in Gang gesetzt. Mit der Bewegung der Verschiebewand 35 in Richtung 38 wird die Kassette an die Wand 34 gefördert und liegt dort unterhalb der Lichtschrankenzeile 49 an dieser an. In der Endstellung der Verschiebeplatte 35 gibt es nun zwei Möglichkeiten, entweder befindet sich die Fahne 42 in einer der Lichtschranken 43 oder nicht. Im letzten Fall entscheidet der Rechner 56 « unbekanntes Format » und schaltet die Elemente 41, 22, 15 in der angegebenen Reihenfolge und mit umgekehrter Antriebsrichtung wieder ein, womit die Kassette ausgegeben wird. Befindet sich jedoch die Fahne 42 in einer der Lichtschranken 43, so wird dieser X-Wert mit den in einem Speicher 57 gespeicherten Werten verglichen.

Mit der Schiebebewegung der Verschiebeplatte 35 wird auch der Taststift 39 an die Kassette geführt. Kann dieser in die vorgesehene Ausnehmung der Kassette eingreifen, so ist die korrekte Lage der Kassette mit Deckel nach oben und vorne bestätigt und die Messung läuft in der oben genannten Weise ab. Liegt die Kassette jedoch verkehrt herum, so wird der Tatstift nach außen gedrückt und betätigt den Schalter 40. Im Rechner wird damit wieder der oben beschriebene Vorgang der Kassettenausgabe ausgelöst.

In unmittelbarer Folge mit der Verschiebebewegung der Einheit 41 wird auch die Abtasteinheit 44 in Gang gesetzt. Zunächst schwenkt diese um die Achse 47 gegen den Uhrzeigersinn, so daß der Haken 45 in den Einfahrbereich der Kassette geschwenkt ist. Sodann wird die Antriebseinheit 44 in Richtung 46 von hinten her auf die Kassette gefahren, bis der Haken 45 an der Rückseite der Kassette zum Anliegen kommt. Damit ist die Kassettenbreite erfaßt. Befindet sich die mit der Abtasteinheit verbundene Fahne 48 in einer Lichtschranke 49, so wird auf mögliches Format erkannt und in den Speicher 57 eingegeben. Steht die Fahne 48 zwischen den Lichtschranken, so wird auf « unmögliches Format » erkannt und die Kassette wie beschrieben wieder ausgegeben.

Im Speicher 57 werden die erkannten X- und Y-Werte mit den gespeicherten Formatwerten verglichen und festgestellt, ob das sich mit diesen Werten ergebende Format existiert. Nachdem die in Rede stehende Vorrichtung für eine Vielzahl von Kassetten und Filmformaten geeignet ist, in den Vorratsmagazinen jedoch nur fünf oder sechs Filmgrößen gespeichert werden können, wird in dem Rechner 56 außerdem überprüft, ob das abgetastete Format überhaupt in den Vorratsmagazinen zum Zwecke einer Neubeladung vorhanden ist. Ist dies nicht der Fall, so wird die Kassette nicht ohne weiteres ausgegeben, sondern zunächst der Bedienungsperson das Fehlen des benötigten Filmes angezeigt. Es kann nämlich sein, daß sich in der Kassette ein Film befindet, der lediglich entnommen werden soll. In diesem Fall kann die Bedienungsperson eine Taste am Eingabepult drücken, die das Entladen der Kassette alleine auslöst.

In gleicher Weise kann die Filmanzeige, welche mit der Spitze 54 den Beladungszustand einer Kassette abtasten kann, anzeigen, ob sich ein Film in der Kassette befindet. Ist dies nicht der Fall, so wird auch dieser Zustand der Bedienungsperson angezeigt, so daß diese eine Taste drücken kann, daß die Kassette lediglich beladen werden soll.

Unabhängig von diesen Sonderfällen wird nun der normale Vorgang nach Erkennen der richtigen Kassettengröße fortgeführt, indem zunächst die Entriegelungseinrichtung 27 ausgelöst wird. In der beschriebenen Weise wird dabei zunächst die Wippe 30 auf die Handhabe der Kassette gedrückt und sodann durch nicht dargestellte Mittel die Einrichtung zur Mitte der Stange 13 hin verschoben. Damit ist die Kassette entriegelt. Die Wippen bleiben in dieser Stellung und halten den Kassettenboden am Geräteboden damit fest. Nun wird die Achse 33 gedreht, womit die Platten 34 und 35 verschwenkt werden und die Haken 32 den Kassettendeckel anheben. Nach dem Be- und Entladen der Kassette wird diese in umgekehrter Weise wieder verschlossen und der Vorgang der Kassettenausgabe wie oben erwähnt ausgelöst.

In Fig. 3 ist in vergrößertem Maßstab das Entladen und Beladen der Kassette näher beschrieben. Dabei sind von der Kassette Boden und Deckel nur zum Teil dargestellt. Wobei der Schnitt durch eine Wippe 30 gelegt ist. In Fig. 3 ist auf der linken Seite das Vorderteil einer geschlossenen Kassette 23 gezeigt, deren Stirnseite an dem nicht dargestellten Schalter 12 in einer Stellung I anliegt. In dieser Stellung wird die Formaterkennung durchgeführt. Sobald dieser Vorgang abgeschlossen ist, wird das Entriegeln durch die Wippen 30 bewirkt und der Kassettendeckel 23a durch die Haken 32 angehoben. Dieses Anheben wird dadurch unterstützt, daß die Kassette in Pfeilrichtung 46 auf das Be- und Entnahmewalzenpaar 55 zufährt. Zu diesem Zweck wird mittels eines Antriebs 66 die zwischen den Platten 34 und 35 gehaltene Kassette zusammen mit den Wandplatten 36 und 37 sowie dem gesamten auf der Stange 13 angeordneten Mechanismus in dieser Richtung relativ zu den Walzen 55 verschoben. Damit wird die Stellung II erreicht. In dieser Stellung befindet sich der Deckel 23a in der ebenfalls mit II gekennzeichneten Stellung und eine Saugeinrichtung 60 greift in die Kassette 23 ein und entnimmt in an sich bekannter Weise das darin befindliche Filmblatt. Die Saugeinrichtung 60 übergibt dieses Blatt dem Transportwalzenpaar 55, das in einer ersten Richtung angetrieben ist und das Blatt je nach Stellung einer Weiche 61 entweder an ein zu einem Speicher führendes Walzenpaar 58 (gezeigte Darstellung) oder direkt an ein zu einer Entwicklungsmaschine führenden Walzenpaar 59 übergibt. Aufgrund des im Rechner 56 festgehaltenen Formats wird nun aus dem entsprechenden Vorratsmagazin 62 ein neues Blatt abgefaßt und den Transportwalzenpaaren 63 und 64 übergeben.

Nach dem das belichtete Filmblatt aus der Kassette entnommen worden ist und das Walzenpaar 55 verlassen hat, wird zum einen die Drehrichtung des Walzenpaares 55 umgekehrt und die Kassette 23 mit den Seitenwänden und der Stange 13 in die Stellung III durch den Antrieb 66 verschoben. In Stellung III ist dabei gezeigt, daß die Wippe 30 immer noch auf den Kassettenboden drückt und die Kassette somit festhält. In dieser Position wird nun das aus dem Vorratsmagazin 62 abgefaßte neue Blatt in die Kassette eingegeben. Dabei wird der Vorderrand des Blattes am Kassettenboden bis an die Scharnierseite bewegt und das hintere Blattende fällt von der unteren Transportwalze 55 in den Innenraum der Kassette ein.

Mit dem Walzenpaar 65 wird angedeutet, daß das neue Filmblatt auch aus einem anderen Vorratsmagazin kommen kann.

Mit den unterschiedlichen Stellungen der Kassette wird erreicht, daß in der Stellung II die Saugeinrichtung verhältnismäßig leicht in die Kassette eingeführt werden kann, was in der Stellung III problematisch wäre. In der Stellung III wird erreicht, daß das Filmblatt genau in die Kassette fällt. In Stellung II bestünde die Gefahr, daß das Blatt über den Kassettenrand heraushängenbliebe.

Nach der Eingabe des Filmes wird die Richtung des Antriebs 66 umgekehrt, so daß die Kassette von Stellung III in Stellung I gefahren wird, in welcher das Verschließen des Deckels 23a erfolgt.

Bei einer Abwandlung der Erfindung kann statt der Zeilen von Lichtschranken 43 und 49 auch jeweils eine Scheibe 68 vorgesehen werden, die mit einem Antrieb 72 für die Bewegung eines Abtastorganes in Verbindung steht. In Fig. 5 ist das Verschiebeblech 35 als Abtastorgan dargestellt, das auf einem mit dem Antrieb 72 in Verbindung stehenden Bandtrieb fest verbunden ist. Auf der Scheibe 68 sind in festgelegten Abständen Marken 70 angebracht, welche von einer Lichtschranke 69 abgetastet werden können. Die Lichtschranke 69 steht mit einem Zähler in Verbindung, dessen Ausgang zum Rechner 56 führt.

Im Betrieb zählt der Zähler 71 die durchlaufenen Marken 70 in der Lichtschranke 69 und außerdem ist die Lichtschranke 69 direkt mit dem Rechner 56 verbunden, um die Stellung einer Marke 70 innerhalb der Lichtschranke 69 bei Beendigung der Bewegung der Verschiebeplatte 35 feststellen zu können. Damit lassen sich in gleicher Weise wie oben beschrieben konkrete Stellungen der Abtastorgane erkennen. Selbstverständlich kann in der gleichen Weise die Abtasteinheit 44 ausgebildet sein.

Hierzu 4 Blatt Zeichnungen.

## Patentansprüche

1. Vorrichtung zum Be- und Entladen von Röntgen-Filmkassetten, mit einem Schacht zur Aufnahme einer Kassette, Transportelementen zum Ein- und Ausfahren der Kassette, Einrichtungen zum Entriegeln, Öffnen und Verschließen der Kassette, Mitteln zur Entnahme eines Filmblattes aus der Kassette und zur Übergabe desselben an ein Transportwalzenpaar und Mitteln zum Eingeben eines neuen Filmblattes in die Kassette, gekennzeichnet durch zweite Transportelemente (66), welche die Kassette (23) nach dem Entriegeln in Einfahrrichtung (46) weiter verschieben und die Kassette von einer Entladestellung (II) in eine davon unterschiedliche Beladestellung (III) fahren, in welcher die Kassette (23) mit ihrer inneren, im Sinne der Einfahrrichtung vorderen Kante etwa unterhalb des Transportwalzenpaares (55) steht, das außer dem Abtransport des entnommenen Filmblatts auch der Zuführung des neuen Filmblatts dient.

2. Vorrichtung nach Anspruch 1, dadurch gekennzeichnet, daß die zweiten Transportelemente (66) die Kassette (23) zunächst von der Entriegelstellung (I), in welcher der Kassettenverschluß mittels der Entriegelungseinrichtung (27) freigegeben wird, in die Entladestellung (II) fahren.

3. Vorrichtung nach Anspruch 2, dadurch gekennzeichnet, daß die Entriegelungseinrichtung (27) eine den Verschlußschieber der Kassette betätigende verschiebbare Wippe (30) aufweist, welche in den drei Stellungen (I bis III) auf die Kassette drückt.

4. Vorrichtung nach einem der Ansprüche 1 bis 3, dadurch gekennzeichnet, daß eine transversal zur Einfahrrichtung (46) wirkende, die Kassette (23) in dem Schacht (6) ausrichtende Verschiebeeinrichtung (35) und eine dieser gegenüberliegende Wand (34) zusammen mit der Entriegelungseinrichtung (27) und der Kassette (23) von den zweiten Transportelementen (66) in die einzelnen Stellungen (I bis III) verschiebbar sind.

## Claims

1. Device for loading and unloading X-ray film cassettes, having a cavity for receiving a cassette, transporting elements for inserting and discharging the cassette, devices for unlocking, opening and closing the cassette, means for removing a film sheet from the cassette and for delivering same to a pair of transporting rollers and means for inserting a new film sheet in the cassette, characterised by two transporting elements (66) which slide the cassette (23) further in the direction of insertion (46) after the cassette (23) has been unlocked and move the cassette from an unloading position (II) into a loading position (III) differing from the unloading position (II), in which loading position (III) the cassette (23) rests with its inner, and in relation to the direction of insertion, front edge, approximately underneath the pair of transporting rollers (55) which serves not only to take away the extracted film sheet but also to introduce the new film sheet.

2. Device according to Claim 1, characterised in that the second transporting elements (66) first move the cassette (23) from the unlocking position (I), in which the cassette lock is released by means of the unlocking device (27), into the unloading position (II).

3. Device according to Claim 2, characterised in that the unlocking device (27) has a displaceable rocker (30) which actuates the locking slide on the cassette and presses on the cassette in the three positions (I to III).

4. Device according to one of Claims 1 to 3, characterised in that a displacing device (35) which acts transversely to the direction of insertion (46) and which aligns the cassette (23) in the cavity (6) and a wall (34) opposite this displacing device (35) can be moved, together with the unlocking device (27) and the cassette (23), by the second transporting elements (66), into the individual positions (I to III).

**Revendications**

1. Dispositif de chargement et de déchargement de cassettes de films de radiographie, comprenant un logement destiné à recevoir une cassette, des éléments de transport pour rentrer et sortir la cassette, des dispositifs destinés à déverrouiller, à ouvrir et à fermer la cassette, des moyens destinés à retirer une feuille photographique de la cassette et à transmettre celle-ci à une paire de rouleaux de transport, et des moyens destinés à introduire une nouvelle feuille photographique dans la cassette, caractérisé par des seconds éléments de transport (66) qui avancent la cassette (23), après le déverrouillage, dans le sens (46) d'entrée, et qui amènent la cassette depuis une position (II) de déchargement jusqu'à une position différente (III) de chargement, dans laquelle le bord interne, placé dans le sens de l'avance, à l'avant de la cassette (23), se trouve approximativement en dessous de la paire de rouleaux (55) de transport, servant, en plus du transport de la feuille photographique retirée, à faire avancer la nouvelle feuille photographique.

2. Dispositif selon la revendication 1, caractérisé par le fait que les autres éléments (66) de transport avancent d'abord la cassette (23) depuis la position (I) de déverrouillage, dans laquelle la fermeture de la cassette est libérée au moyen du dispositif (27) de déverrouillage, jusqu'à la position (II) de déchargement.

3. Dispositif selon la revendication 2, caractérisé par le fait que le dispositif (27) de déverrouillage est pourvu d'un culbuteur (30) baladeur, destiné à actionner la barre d'enclenchement de la cassette, qui appuie sur la cassette dans les trois positions (I à III).

4. Dispositif selon une des revendications 1 à 3, caractérisé par le fait qu'un dispositif (35) de manœuvre agissant transversalement par rapport au sens (46) d'entrée, destiné à orienter la cassette (23) dans le logement (6), et une paroi juxtaposée (34), ainsi que le dispositif (27) de déverrouillage et la cassette (23), peuvent être placés, au moyen des seconds éléments (66) de transport, dans les positions individuelles (I à III).

Fig.1

Fig.2

0 102 577

Fig.3

0 102 577

Fig. 4

Fig. 5